(19) Europäisches Patentamt
European Patent Office
Office européen des brevets

(11) **EP 4 296 916 B1**

(12) **EUROPEAN PATENT SPECIFICATION**

(45) Date of publication and mention
of the grant of the patent:
**01.01.2025 Bulletin 2025/01**

(21) Application number: **23180648.0**

(22) Date of filing: **21.06.2023**

(51) International Patent Classification (IPC):
**G06Q 50/06** (2024.01)    **G06Q 10/04** (2023.01)
**B60L 53/64** (2019.01)    **G06Q 10/02** (2012.01)
**G06Q 10/0631** (2023.01)    **G06Q 30/0201** (2023.01)

(52) Cooperative Patent Classification (CPC):
**G06Q 10/04; B60L 53/64; G06Q 10/02;**
**G06Q 10/0631; G06Q 30/0201; G06Q 30/0283;**
**G06Q 50/06; G06Q 50/40;** B60L 2260/44;
B60L 2260/50; B60L 2260/54; Y02T 10/70;
Y02T 10/7072; Y02T 90/12

(54) **SCHEDULING ELECTRIC VEHICLES (EVS) FOR CHARGING AT ELECTRIC VEHICLE CHARGING STATION (EVCS)**

PLANUNG VON ELEKTROFAHRZEUGEN ZUM LADEN AN EINER ELEKTROFAHRZEUGLADESTATION

PLANIFICATION DE VÉHICULES ÉLECTRIQUES (EVS) POUR CHARGER UNE STATION DE CHARGE DE VÉHICULE ÉLECTRIQUE (EVC)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.06.2022 IN 202221036454**

(43) Date of publication of application:
**27.12.2023 Bulletin 2023/52**

(73) Proprietor: **Tata Consultancy Services Limited Maharashtra (IN)**

(72) Inventors:
• **LOKHANDE, SMITA SANJAY**
**400093 Mumbai, Maharashtra (IN)**
• **BICHPURIYA, YOGESH KUMAR**
**411013 Pune, Maharashtra (IN)**
• **MENON, VISHNU PADMAKUMAR**
**411013 Pune, Maharashtra (IN)**
• **SARANGAN, VENKATESH**
**600113 Chennai, Tamil Nadu (IN)**
• **DAS, DEBARUPA**
**700091 Kolkata, West Bengal (IN)**
• **BANDHU, VIVEK**
**411057 Pune, Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**US-A1- 2012 245 750**

• **JAVED MUHAMMAD UMAR ET AL: "Scheduling Charging of Electric Vehicles in a Secured Manner using Blockchain Technology", 2019 INTERNATIONAL CONFERENCE ON FRONTIERS OF INFORMATION TECHNOLOGY (FIT), IEEE, 16 December 2019 (2019-12-16), pages 351 - 3515, XP033714116, DOI: 10.1109/FIT47737.2019.00072**
• **MUSHFIQUR R SARKER ET AL: "Optimal operation of aggregated electric vehicle charging stations coupled with energy storage", IET GENERATION, TRANSMISSION & DISTRIBUTION, IET, UK, vol. 12, no. 5, 19 January 2018 (2018-01-19), pages 1127 - 1136, XP006103963, ISSN: 1751-8687, DOI: 10.1049/IET-GTD.2017.0134**

- **EL-TAWEEL NADER A ET AL: "Optimization Model for EV Charging Stations With PV Farm Transactive Energy", IEEE TRANSACTIONS ON INDUSTRIAL INFORMATICS, IEEE SERVICE CENTER, NEW YORK, NY, US, vol. 18, no. 7, 21 September 2021 (2021-09-21), pages 4608 - 4621, XP011906145, ISSN: 1551-3203, [retrieved on 20210921], DOI: 10.1109/TII.2021.3114276**
- **WU YU ET AL: "Demand side energy management of EV charging stations by approximate dynamic programming", ENERGY CONVERSION AND MANAGEMENT, ELSEVIER SCIENCE PUBLISHERS, OXFORD, GB, vol. 196, 27 June 2019 (2019-06-27), pages 878 - 890, XP085796318, ISSN: 0196-8904, [retrieved on 20190627], DOI: 10.1016/J.ENCONMAN.2019.06.058**

## Description

CROSS-REFERENCE TO RELATED APPLICATIONS AND PRIORITY

The present application claims priority from Indian patent application no. 202221036454, filed on June 24, 2022.

TECHNICAL FIELD

The disclosure herein generally relates to scheduling electric vehicles (EVs) for charging and, more particularly, to real-time scheduling EVs for charging at electric vehicle charging station (EVCS).

BACKGROUND

Increasing focus on sustainability is driving the transportation sector towards e-mobility. With the impending exhaustion of fossil fuel and growing concerns on environmental issues, Electric Vehicle (EV) is anticipated to be the next generation of transport. However, high penetration of EVs creates a need for good EV charging infrastructure or Electric Vehicle Charging Stations (EVCS) for charging the EVs conveniently.

The EVCS procure power from open energy markets at time varying prices. Hence the EVCS that facilitates charging of the EVs, must have the knowledge of day-ahead EV charging requirements in-order to procure power from markets (forecast and bid for electricity at market). However, determining the EV charging demand is highly complicated and different from residential/commercial load as it is heavily dependent on several uncertain factors associated with the EVs such as EVs individual power requirements, driving and travel patterns, EV owner behavior etc. Further as the arrival of Electric Vehicles (EVs) is not known to EVCS apriori, it becomes difficult to have an estimate of the EVs demand and minimize the cost of power procurement to be obtained from the open energy markets.

Numerous techniques of EV load prediction have been discussed in literature. Some of these methods are based on driving patterns derived from commuting behavior of population, while few other state-of-arts techniques employ forecasting techniques based on historical charging data using neural networks or queue mapping method to convert the EV queue to the charging demand queue to schedule EVs. However, most of the state-of-the-art techniques results in a mismatch between the power purchased in day-ahead market and power scheduled in real time for a particular time instant thus leading to an efficient scheduling the EVs at real-time. Hence it is still a challenging task for the EVCS to model the demand optimize and schedule the EVs in real-time. US 2012/245750A1 discloses a charging prediction database that stores information on electric vehicles expected to arrive for charging. A profile/charging information database stores information on electric vehicles that have arrived and been waiting for charging. A power database stores information on a power source including at least one of a power grid and a stationary battery. An energy calculating unit calculates energy available from the power source based on the power database. A scheduling unit schedules charging of the electric vehicles waiting for charging in consideration of the electric vehicles expected to arrive.

SUMMARY

Embodiments of the present disclosure present technological improvements as solutions to one or more of the above-mentioned technical problems recognized by the inventors in conventional systems. For example, in one embodiment, a system for real-time scheduling EVs for charging at EVCS is provided as defined by independent claim 5

In another aspect, a method for real-time scheduling EVs for charging at EVCS is provided, as defined by claim 1.

In yet another aspect, a non-transitory computer readable medium for real-time scheduling EVs for charging at EVCS is provided, as defined by independent claim 9.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for real-time scheduling EVs for charging at EVCS, according to some embodiments of the present disclosure.

FIG.2 is a functional block diagram of the system of FIG. 1, for real-time scheduling EVs for charging at EVCS, according to some embodiments of the present disclosure.

FIGS.3A to FIG.3C is a flow diagram illustrating a method 300 for real-time scheduling EVs for charging at EVCS, by the system of FIG. 1, in accordance with some embodiments of the present disclosure.

FIG.4 is a illustrates an experimental graph result of forecasting a EVCS demand profile for the EVCS according to some embodiments of the present disclosure.

FIG.5 is a illustrates an experimental graph result to obtain a minimum cost EVCS demand profile for the EVCS according to some embodiments of the present disclosure.

FIG.6 is a illustrates an experimental graph result of real time scheduled charging profile according to some embodiments of the present disclosure.

FIG.7 is a illustrates an experimental graph result of a total procurement cost for all days of a simulation period according to some embodiments of the present disclosure.

FIG.8 is a illustrates an experimental graph result of the total procurement over entire month according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

An EVCS has multiple charging points all over a geographical area. The EVCS has a fixed number of EVs subscribed to it which come daily and park in any of charging points. Further the EVCS also has all the information about type of EVs, the EV's suitable charging rates and battery capacity. The charging behaviour of EVs is not fixed and varies daily and some EVs have a fixed schedule (fixed arrival and departure time) with a little variance while some vehicles show a high variance in their schedule. Further despite the nature of schedule, the energy requirement of each EV tends to change every day resulting into highly varying demand of EVCS. Hence, considering the above-mentioned points, the main task of EVCS is to schedule the arriving EVs and fulfill their total requirement.

Usually, the EVCS manages the cost of power procurement by following the steps: 1) Forecast a total station load for the next day, 2) bid in day-ahead market for buying power equivalent to forecasted load, and then 3) optimally schedule the arriving EVs in real time to incur minimum charging cost which is close to bid profile. However, in case of a mismatch between the power purchased in day-ahead market and power scheduled in real time for a particular time instant, the EVCS has to buy power from real time market which is quite costly. Considering the above mentioned points, it is a challenging task for the EVCS to model the demand, optimize and schedule the EVs in real-time.

The disclosure estimates a demand profile of an EVCS, optimizes the demand profile and schedules EV arrivals in real time. The scheduling is performed by offering flexibility by 1) increasing parking hours so that charging sessions can be scheduled in lower price periods and 2) participating in peer-to-peer transfer, so that EV with extra parking time charged during lower price periods can transfer power to others during high price periods.

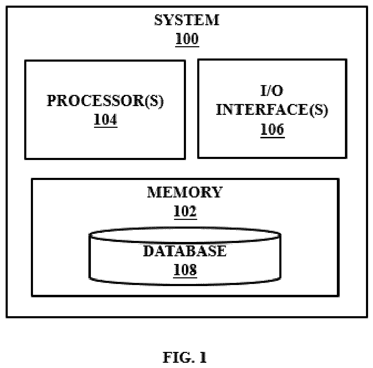

Referring now to the drawings, and more particularly to FIG. 1 through FIG.8, where similar reference characters denote corresponding features consistently throughout the figures, there are shown preferred embodiments and these embodiments are described in the context of the following exemplary system and/or method.

FIG.1 is an exemplary block diagram of a system 100 for real-time scheduling EVs for charging at EVCS in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of the system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 is configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, a network cloud and the like.

The I/O interface(s) 106 can include a variety of software and hardware interfaces, for example, a web interface, a graphical user interface, a touch user interface (TUI) and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices (nodes) of the system 100 to one another or to another server.

The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

Further, the memory 102 may include a database 108 configured to include information regarding for real-time scheduling EVs for charging at EVCS. The memory 102 may comprise information pertaining to input(s)/output(s) of each step performed by the processor(s) 104 of the system 100 and methods of the present disclosure. In an embodiment, the database 108 may be external (not shown) to the system 100 and coupled to the system via the I/O interface 106.

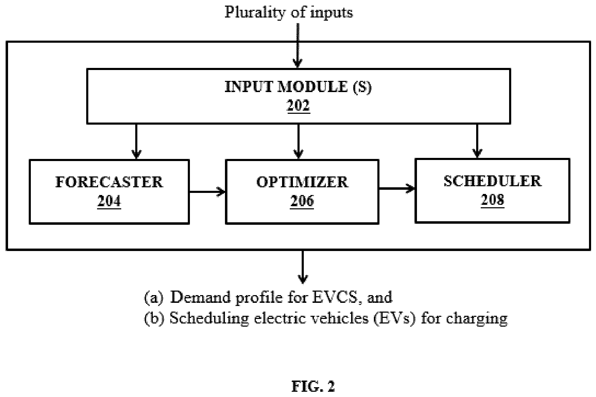

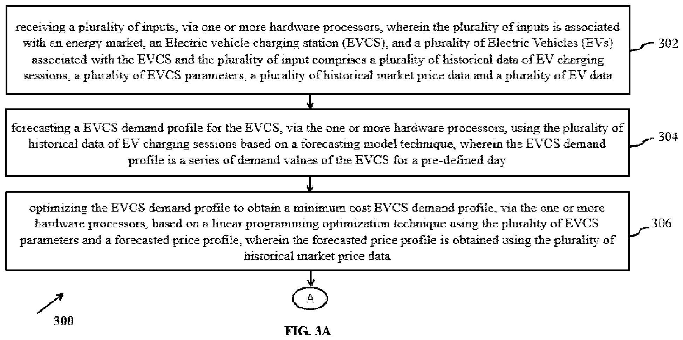

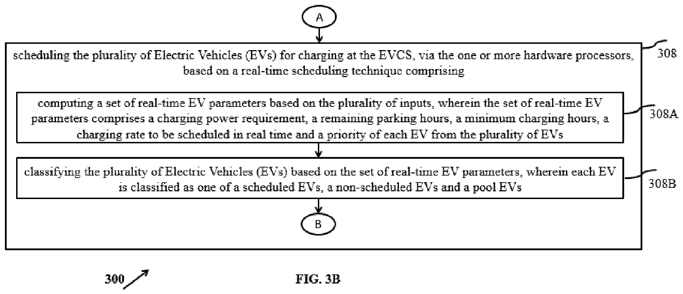

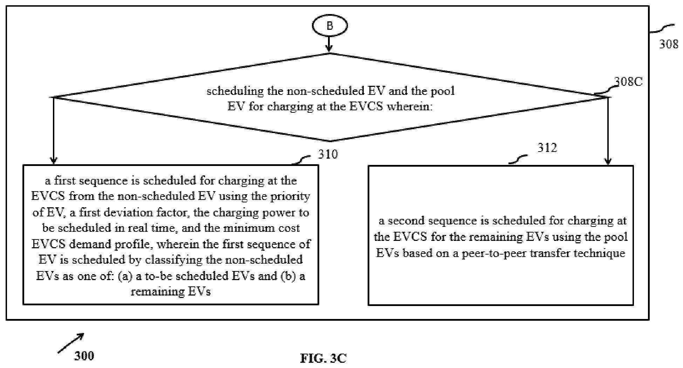

Functions of the components of system 100 are explained in conjunction with functional overview of the system 100 in FIG.2 and flow diagram of FIGS.3A and FIG.3B for real-time scheduling EVs for charging at EVCS.

The system 100 supports various connectivity options such as BLUETOOTH®, USB, ZigBee and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. The components and functionalities of the system 100 are described further in detail.

FIG.2 is an example functional block diagram of the various modules of the system of FIG.1, in accordance with some embodiments of the present disclosure. As depicted in the architecture, the FIG.2 illustrates the functions of the modules of the system 100 that includes for real-time scheduling EVs for charging at EVCS.

As depicted in FIG.2, the functional system 200 of system 100 is configured for real-time scheduling EVs for charging at EVCS.

The system 200 comprises an input module 202 configured for receiving a plurality of inputs, wherein the plurality of inputs is associated with an energy market. The system 200 further comprises a forecaster 204 configured for forecasting a EVCS demand profile for the EVCS using the plurality of inputs based on a forecasting model technique. The system 200 further comprises an optimizer 206 configured for optimizing the EVCS demand profile to obtain a minimum cost EVCS demand profile based on a linear programming optimization technique using the plurality of inputs. The system 200 further comprises a scheduler 208 configured for scheduling the plurality of Electric Vehicles (EVs) for charging at the EVCS based on a real-time scheduling technique.

The various modules of the system 100 and the functional blocks in FIG.2 are configured for real-time scheduling EVs for charging at EVCS and are implemented as at least one of a logically self-contained part of a software program, a self-contained hardware component, and/or, a self-contained hardware component with a logically self-contained part of a software program embedded into each of the hardware component that when executed perform the above method described herein.

Functions of the components of the system 200 are explained in conjunction with functional modules of the system 100 stored in the memory 102 (not shown) and further explained in conjunction with flow diagram of FIGS.3A-3C. The FIGS.3A-3C with reference to FIG.1, is an exemplary flow diagram illustrating a method 300 for real-time scheduling EVs for charging at EVCS using the system 100 of FIG. 1 according to an embodiment of the present disclosure.

The steps of the method 300 of the present disclosure will now be explained with reference to the components of the system 100 of FIG. 1 for real-time scheduling EVs for charging at EVCS and the modules 202-208 as depicted in FIG.2 and the flow diagrams as depicted in FIGS.3A-3C. Although process steps, method steps, techniques or the like may be described in a sequential order, such processes, methods and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 302 of the method 300, a plurality of inputs is received at the input module 202. The plurality of inputs is associated with an energy market, an Electric vehicle charging station (EVCS), and a plurality of Electric Vehicles (EVs) associated with the EVCS. The plurality of input comprises a plurality of historical data of EV charging sessions, a plurality of EVCS parameters, a plurality of historical market price data and a plurality of EV data.

In an embodiment, the plurality of historical data of EV charging sessions includes several parameters such as an arrival time of the EVs, a departure time of the EVs, a parking time of the EVs, a charging duration of the EVs, an energy requirement of the EVs, a charging rate of the EVs and a transaction id for the EVs. Further the plurality of EVCS parameters includes a maximum minimum EVCS power requirement for each hour. The plurality of historical market price data includes a day ahead market clearing price for each hour. The plurality of EV data includes a charger type and a EV battery capacity.

At step 304 of the method 300, a EVCS demand profile is forecasted for the EVCS by the forecaster 206. The EVCS demand profile is a series of electricity demand values of the EVCS for a pre-defined day. The EVCS demand profile is forecasted using the plurality of historical data of EV charging sessions based on a forecasting model technique.

In an embodiment, the forecasting model technique used for forecasting the EVCS demand profile ( $P_t^{forc}$ ) includes an Auto Regressive Integrated Moving Average (ARIMA) technique.

The EVCS is required to forecast a total demand profile of all its charging points for buying power from a day-ahead market. The forecasting of demand can be done in two ways - (a) addition of forecasted charging sessions of all the EVs or (b) forecasting of total station demand (for EVCS). For forecasting charging sessions of all the EVs - the record of charging behaviour of all the EVs in the station is required for predicting every EV's arrival time and power requirement. Hence making the forecasting charging sessions of all the EVs is a tedious task (when there is a large number of vehicles) and with relatively more error in the summed aggregated demand profile of each EV. Hence the disclosed embodiments forecast the demand profile of the total station demand profile itself.

The disclosed ARIMA technique is a combination of differencing with autoregression and moving average models. A plurality of predictors in the autoregression and moving average model include lagged terms of forecast variable and lagged errors. The ARIMA technique is characterized as model with order as expressed below:

$$Order = (p, d, q) \qquad (1)$$

where,

p is the order of autoregressive part,
d is the degree of the first differencing and
q is the order of the moving average part.

Appropriate values of p and q are found using an Auto Correlation Function (ACF) and a Partial Auto Correlation Function (PACF) plots techniques. The estimation is done by minimizing the sum of residuals of all the historical points in the training dataset. Further, the demand forecasting is done individually for each time instant t. Thus, there is a ARIMA model which gets trained over a training dataset of historical values for each *t* and estimates the EVCS demand profile ( $P_t^{forc}$ ).

At step 306 of the method 300, the EVCS demand profile is optimized by the optimizer 206. The EVCS demand profile ( $P_t^{forc}$ ) is optimized to obtain a minimum cost EVCS demand profile ( $P_t^{opti}$ ). The optimization is based on a linear programming optimization technique using the plurality of EVCS parameters and a forecasted price profile. The forecasted price profile is obtained using the plurality of historical market price data.

In an embodiment, the linear programming optimization technique is expressed as shown below:

$$\max_{P_t^{opti}} \sum_{t=1}^{T} \widehat{\lambda}_t P_t^{opti} \qquad (2)$$

subject to:

$$P_t^{aggMin} \leq P_t^{opti} \leq P_t^{aggMax}, \ \forall t \in T \qquad (3)$$

$$\sum_{t=1}^{T} P_t^{opti} = \sum_{t=1}^{T} P_t^{forc} \qquad (4)$$

where,

$\lambda_t$ is forecasted price profile,
$P_t^{forc}$ is EVCS demand profile,
$P_t^{opti}$ is minimum cost EVCS demand profile, and
$P_t^{aggMin}$ and $P_t^{aggMax}$ are plurality of EVCS parameters.

The $P_t^{aggMin}$ and $P_t^{aggMax}$ are the maximum and minimum demand requirement of the EVCS at t respectively. As the above values change daily with a different schedule everyday, these values are selected from the plurality of historical data of EV charging sessions. To get highest probable values, a distribution histogram of total demand is extracted for all values of t. Further, the choice of $P_t^{aggMin}$ and $P_t^{aggMax}$ changes based on expected confidence level, wherein the limits can also be adjusted if schedule of some of the EVs is known beforehand. In an example scenario, if there is an EV whose schedule is fixed (fixed charging time) and is inflexible, $P_t^{aggMin}$ can be modified to accommodate it. Hence the above optimization ensures that total energy of optimized profile is same as that of forecasted profile.

At step 308 of the method 300, the plurality of Electric Vehicles (EVs) is scheduled for charging at the EVCS in the scheduler 208. The plurality of Electric Vehicles (EVs) is scheduled for charging based on a real-time scheduling technique. The real-time scheduling technique is explained in the below section using steps 310 to 318.

The schedule for charging of arriving vehicles ( $P_{t,v}^{chg}$ ) using the $P_t^{opti}$ as the reference baseline. The real time scheduled ( $P_{t,v}^{chg}$ ) may not exactly match with $P_t^{opti}$, but the goal is to obtain a local optimum for each $t$ such that the deviation ( $P_t^{opti}$ - $\sum_{v=1}^{v_t} P_{t,v}^{chg}$ ) is minimum. The proposed real-time scheduling technique avails the flexibility of EV to do so. EV can offer flexibility in two ways:

(a) Increased parking time: if an EV has a longer parking time, the EVCS owner gets a degree of freedom for shifting the charging during lower price time periods.
(b) Participating in peer-to-peer transfer: an EV who is completely charged and has sufficient idle hours before its departure, can discharge within the pool and help other high priority vehicles to reduce the grid import and not violate the optimal demand profile. The peer-to-peer transfer is enabled only for those hours for which market price is generally high, wherein the time instances are calculated over an average price profile obtained from historical price data.

The real-time scheduling technique is carried out with the plurality of inputs parameters of all EVs at each time instant t (real-time values). The vehicles present at $t$ are termed to form a virtual pool, wherein $V_t$ is the set which consists of all the vehicles present in the station at time t.

At step 310 of the method 300, a set of real-time EV parameters is computed based on the plurality of inputs. The set of real-time EV parameters comprises a charging power requirement ( $P_{t,v}^{req}$ ), a remaining parking hours ( $N_{t,v}^{park}$ ), a minimum charging hours ( $N_{t,v}^{chg}$ ), a charging rate to be scheduled in real time and a priority of each EV from the plurality of EVs.

In an embodiment, $P_{t,v}^{req}$ is the charging power requirement for electric vehicle (v) and $N_{t,v}^{park}$ is the number of remaining parking hours of EV (v) at a time *t*.

$$N_{t,v}^{park} = T_v^{dep} - t \qquad (5)$$

$N_{t,v}^{chg}$ is the minimum number of charging hours required to satisfy $P_{t,v}^{req}$ and is expressed as shown below:

$$N_{t,v}^{chg} = P_{t,v}^{req} / P_{t,v}^{chgrate} \qquad (6)$$

$P_{t,v}^{chg}$ ($\forall_v \in V_t$) is the charging power to be scheduled in real time which is decided based on $P_{t,v}^{req}$ at t such that :

$$\text{If } P_{t,v}^{req} \geq P_{t,v}^{chgrate} \text{ ; } P_{t,v}^{chg} = P_{t,v}^{chgrate} \text{ which is the maximum charging rate} \quad (7)$$

$$\text{If } P_{t,v}^{req} \leq P_{t,v}^{chgrate} \text{ ; } P_{t,v}^{chg} = P_{t,v}^{chgrate} \quad (8)$$

$\psi_v$ is the priority of EV, wherein the priority indicates which EV should be preferred for charging in that hour. The $\psi_v$ thus ensures that vehicles are charged completely before their departure time and is expressed as shown below:

$$\psi_{t,v} = N_{t,v}^{chg} / N_{t,v}^{park} \quad (9)$$

At step 312 of the method 300, the plurality of Electric Vehicles (EVs) is classified based on the set of real-time EV parameters. The EVs from the plurality of EVs is classified as one of:

(a) a scheduled EVs, ( $V_t^{sch}$ )

(b) a non-scheduled EVs ( $V_t^{non-sch}$ ) , and

(c) a pool EVs ( $V_t^{pool}$ ).

The scheduled EVs ( $V_t^{sch}$ ) are a set of EV s that are currently scheduled for charging. The set of plugged-in EV (who have already started charging in previous time slots t - 1 and before). The EVs are arranged in descending order of priorities so that high priority EV get scheduled first.

Further the non-scheduled EVs ( $V_t^{non-sch}$ ) is a set of EVs that have not scheduled for charging, as in the set of EVS which haven't started charging yet. The non-scheduled EVs set will include all the new EVs arriving at t and those EVs who have come earlier but haven't started charging yet. The vehicles in this set are also arranged in descending of priorities so that high priority EV get scheduled first.

Further the pool EVs ( $V_t^{pool}$ ) is a set of set of EV s that are already charged and have $N_{t,v}^{park} > N_t^{reqPark}$ . The $N_{t,v}^{park} > N_t^{reqPark}$ condition which implements the" Increased parking time". The pool EVS are arranged in descending order of $N_{t,v}^{park}$ values so that EVs with higher parking time are taken up first for peer-to-peer discharging. $N_t^{reqPark}$ t is calculated at every $t$ in $T^{p2p}$. The $N_t^{reqPark}$ value is set equal to the number of consecutive time instances in the future set of $N_t^{reqPark}$ .to take care that the discharging EV does not charge immediately during next peer-to-peer instant and has sufficient parking time after peer-to-peer duration to charge before its departure.

The scheduled EVs continue the charging of EVs who have been plugged in previous time slots. Hence only the non-scheduled EVs have been charged. $\Delta_0$ is the deviation between the $P^{opti}$ and $P_{t,j}^{chg}$ of all the vehicles who have already started charging (vehicles from set $V_t^{sch}$ ). It ensures that the vehicles who have started charging in previous time instances continue their charging without being disconnected till their total requirement is satisfied.

$$\Delta_0 = P_t^{opti} - \sum_{j=1}^{V^{Sch}} P_{t,j}^{chg} \quad (10)$$

For $i$ in $V_t^{nonSch}$ do :

$$\Delta_i = P_t^{opti} - \sum_{j=1}^{V^{Sch}} P_{t,j}^{chg} - \sum_{j=1}^{V_t^{nonSch}} P_{t,k}^{chg} , \forall k \leq i \quad (11)$$

*$i^{min}$ computed to get minimum ($|\Delta_i|$)*

The real-time scheduling technique proposes to also use the already charged EVs (Pool EVs) to charge the non-scheduled EVs. Hence both the non-scheduled EVs and the pool EV s are used for further scheduling, which is explained below sections.

At step 314 of the method 300, the non-scheduled EV and the pool EV are scheduled for charging at the EVCS. The non-scheduled EVs are charged immediately or based on a peer-to-peer transfer technique based on a first deviation factor or a second deviation factor as explained in the below sections.

At step 316 of the method 300, a first sequence is scheduled for charging at the EVCS from the non-scheduled EV. The first sequence is scheduled using the priority of EV, a first deviation factor, the charging power to be scheduled in real time, and the minimum cost EVCS demand profile. The first sequence of EV is scheduled by classifying the non-scheduled EVs as one of:

> (a) to-be scheduled EVs, and
> (b) remaining EVs.

In an embodiment, first sequence of EV is scheduled by classifying the non-scheduled EVs based on the first deviation factor ($\Delta$). The $\Delta$ is the deviation between $P_t^{Opti}$ and $P_{t,v}^{chg}$ of EVs - $V_t^{sch}$ and $V_t^{non-sch}$ at the station and assists in deciding the first sequence of scheduling the EVs. The first sequence of calculated for all combinations of vehicles - (high to low priority) at the station. The combination of vehicles $i = (1, \dots i^{min} \epsilon V_t^{non-sch})$ which gives $i^{min}$ are selected and scheduled for starting the EV charging. Thus, based on the $i^{min}$, to-be scheduled EVs are identified for first schedule and the remaining vehicles are scheduled based on a second sequence as described in the next section.

At step 318 of the method 300, a second sequence is scheduled for charging at the EVCS for the remaining EVs using the pool EVs based on the peer-to-peer transfer technique based on a second deviation factor ($\Delta_{pool}$).

In an embodiment, the second deviation factor ($\Delta_{pool}$) is a deviation of a net peer-to-peer transfer parameter from the first deviation factor ($\Delta$). The peer-to-peer transfer is obtained using the plurality of EV data of the pool EVs and the plurality of EV data of the unscheduled EVs. The $\Delta_{pool}$ gives the total unmet power of the vehicles $j = (i^{min} + 1; \dots; V_t^{non-sch})$ which were not selected previously in the first schedule and also indicates how much trading can be carried out with least deviation.

The second sequence is scheduled if $t \in T^{p2p}$ for EV s in $V_t^{non-sch}$ using $V_t^{pool}$. The EV combination charging for ($i \in i^{min} + 1; \dots; i^{max}$) and pool discharging for $q \in (1, \dots, q^{min})$ which results in least $\Delta_{q^{min}}^{pool}$ is scheduled for pool transfer.

$$If \; t \in \epsilon T^{p2p} : Define \; \Delta_{pool} \; \forall \; p \; \in \; V_t^{pool} + 1 \qquad (12)$$

$$V_0^{pool} = \sum_{j= i^{min}+1}^{V^{nonSch}} P_{t,j}^{chg}$$

*for q in* $V_t^{pool}$ *do :* $\Delta_{i^{min}} + V_0^{pool} - \sum_{r=1}^{V_t^{pool}} P_r^{chgrate}$ *,* $\forall r \le q$

*Compute :* $q^{min}$ *for* $min(|\Delta_q^{pool}|)$ *&* $i^{min}$ *such that* $\sum_{q=1}^{q^{min}} P_q^{chgrate}$

$$\sum_{i= i^{min}+1}^{i^{max}} P_{t,i}^{chg}$$

Once the charging/peer to peer transfer is complete, the power requirements $P_{t+1,v}^{Req}$ for next time instant (t + 1) of all EVs are updated.

$$for\ i\ in\ (1,....i^{max}) : Update\ P_{t+1,i}^{Req} = P_{t,i}^{req} - P_{t,i}^{chg} \qquad (13)$$

$$for\ q\ in\ \left(1,....q^{min}\right) : Update\ P_{+1,q}^{Req} = P_{q,i}^{req} - P_{q,i}^{chg} \qquad (14)$$

EXPERIMENTS:

For experiment purposes, an EVCS with 30 EV subscribers was considered (N=30). The subscribed EVs visit the EVCS for charging on almost a daily basis. The charger types of the subscribed EVs is mentioned in Table 1, wherein the charger types and their penetration level are decided based on the maximum charge rate and the total number of the EV population.

Table 1 : Charger types of the subscribed EVs in a EVCS

| Type | Charger type (kW/hr) | Penetration level (%) |
|------|----------------------|-----------------------|
| A    | 3.3                  | 51                    |
| B    | 10                   | 38                    |
| C    | 6.6                  | 11                    |

The historical data of total EVCS demand along with the EV charging sessions for a duration of a year is available. The entire process used by the EVCS owner for scheduling of EVs is divided in three modules - the forecaster 204, the optimizer 206 and the scheduler 208 ( as described in FIG.2). The forecaster 204, the optimizer 206 are implemented on a day ahead basis while the scheduler 208is implemented in real time on an hourly basis. The results are described in the below sections.

RESULTS:

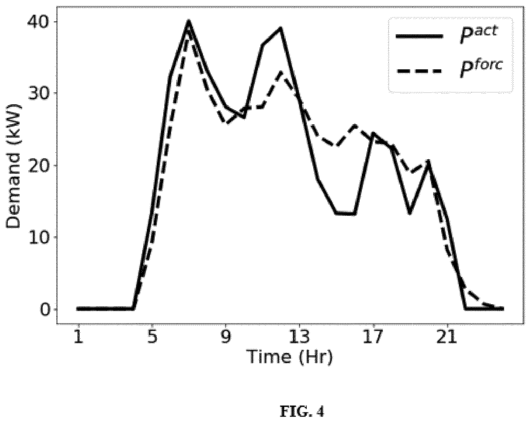

The forecaster 204: A training dataset of 100 days is used for training the ARIMA model for each hour t. The obtained forecasted total demand profile of the EVCS station for 1st Sept 2019 is illustrated in FIG.4, where it can be inferred that $P_t^{forc}$ is close to actual demand profile $P_t^{act}$ . The difference between total energy required for charging EVs in both cases is 1.7 %.

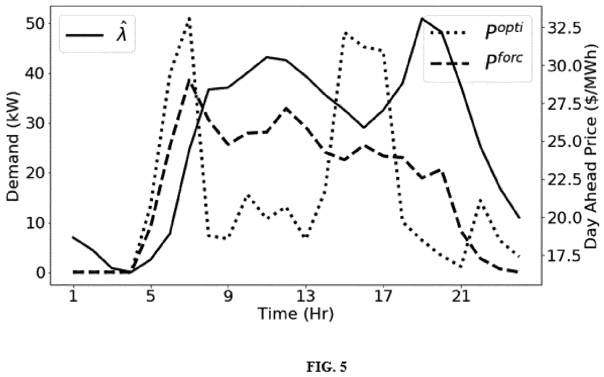

The optimizer 206: The values of $P_t^{aggMin}$ and $P_t^{aggMax}$ are extracted from the distribution histogram of hourly station demand, wherein distribution is calculated over same 100 historical days which were used to get $P_t^{forc}$ . For each hour, quantile value of 5% is used as $P_t^{aggMin}$ while quantile value of 95% is used as $P_t^{aggMax}$ . These limits are used to optimize the forecasted profile $P_t^{forc}$ to obtain the minimum cost EVCS demand profile of $P_t^{opt}$ as shown in Fig. 5, wherein it can be observed that the formulation modifies $P_t^{forc}$ such that its value is lower during higher price $\hat{\lambda}_t$ time slots. It is to be noted that, the optimal profile is heavily dependent on the forecasted price profile $\hat{\lambda}_t$.

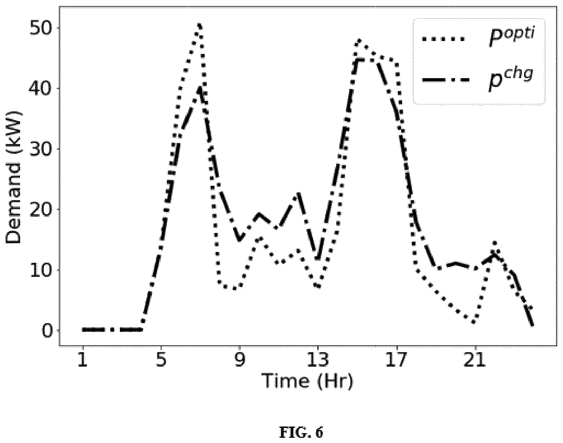

The scheduler 208: On observation of average of actual market price profile $\lambda_t$ obtained from historical data, two distinct peaks can be identified. Hence the set $T^{p2p}$ = (8,...14,...18,...21) coinciding with the high price periods is selected for peer-to-peer trading. The disclosed scheduling algorithm is implemented with data of fresh arrivals and updated parameters of already parked vehicles for each hour t. The real time scheduled charging profile $P_{t,v}^{chg}$ obtained as a result is shown in Fig.6. It can be observed that $P_{t,v}^{chg}$ is very close to the optimized profile $P_t^{opt}$ . As it is important to note that the disclosed scheduling algorithm allows violation of $P_t^{opt}$ for some time instances, the requirements of EVs are always satisfied before their departure time. Hence there is no issue of infeasibility in the method disclosed herein.

The total power requirement of EVCS for the simulation day is 415 kW. Out of total requirement, 29.8 kW is traded in pool. It can be observed that pool discharging are the ones with longer parking duration. Thus, their flexibility of higher parking time and readiness to participate in peer-to-peer trading aids in reducing the total power procurement cost of EVCS, wherein these EVs can be offered incentives in proportion to their battery degradation, however incentive allocation mechanism is out of scope of this experiment.

Real time scheduling is done using $P_t^{opt}$ as reference baseline which is optimized using forecasted price profile $\hat{\lambda}_t$. However, the total procurement cost of EVCS is calculated after the day is overusing the actual market price $\hat{\lambda}_t$. The proposed model is simulated over the month with daily varying arrival schedules and price profiles. Comparison of total procurement cost for the simulation period is done for following three cases:

1) Base: This case corresponds to original scheduling method that is : when the EVCS starts charging the EVs as soon as they arrive at the station without any optimization.

$$Cost : \sum_{t=1}^{T}(\lambda_t P_t^{act}) \qquad (15)$$

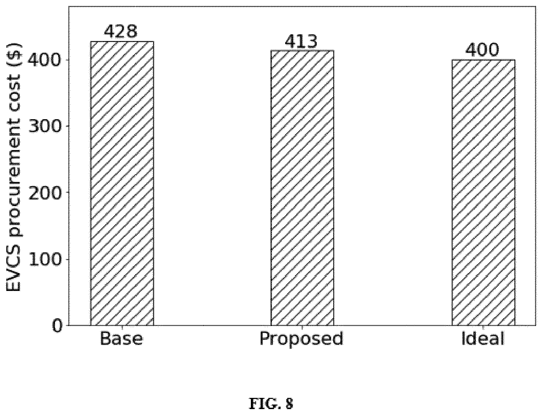

2) Proposed: It is the case where disclosed technique discussed is applied (represented as "proposed" in the graph of FIG. 8);

$$Cost : \sum_{t=1}^{T}(\lambda_t \sum_{n=1}^{N} P_{t,n}^{chg}) \qquad (16)$$

3) Ideal: This is the scenario where information of all the parameters ( $T_v^{arr}, T_v^{dep}, P_v^{Req}$ , $\lambda_t$ is already known. With all this known information, scheduling of EVs, $P_{t,n}^{sch}$ to get the least cost is indicated in objective of (5), subject to constraints

$$\min_{P^{sch}} \sum_{t=1}^{T} \lambda_t \sum_{n=1}^{N} P_{t,n}^{sch} \qquad (17)$$

Subject to:

$$0 \le P_{t,n}^{sch} \le P_n^{chgrate} \ \alpha_t \in T, n \in N \quad (18)$$

$$\sum_{t=1}^{T} P_{t,n}^{sch} = P_n^{Req} , \forall n \in N \qquad (19)$$

$$\sum_{n=1}^{N} P_{t,n}^{sch} \le P_t^{aggMax} , \forall t \in T \qquad (20)$$

The $P_{t,n}^{sch}$ is the scheduled charging power of $n^{th}$ EV at time $t$. $\alpha_{t,n}$ is a binary variable which indicates the parking hours ( $T_n^{dep} - T_n^{arr}$ ) of the $n^{th}$ EV. $\alpha_{t,n}$ = 1, if it is parked in the station, else it is zero. $P_{t,n}^{sch}$ in each hour is constrained by its charging rate $P_{t,n}^{chgrate}$ n as shown in above equations Constraints (19) (above equation) ensures that the total requirement of every EV is satisfied. The constrain (20) the total scheduled power for every t so that maximum station demand is not violated.

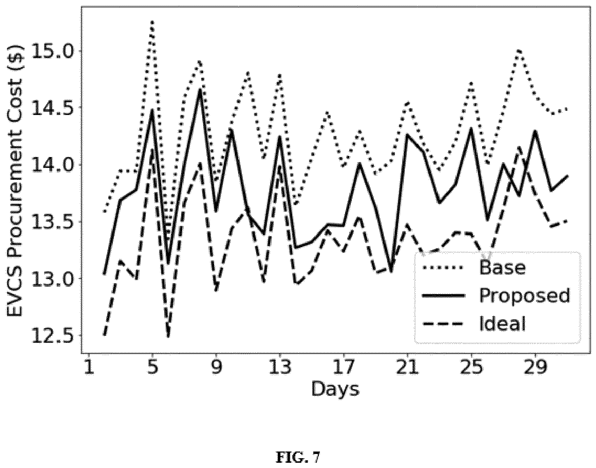

Total procurement cost for all days of simulation period is given in Fig.7. The Base case has highest cost as it does not do any optimization. The cost of disclosed case is always between Base and Ideal case cost which proves the efficacy of the proposed real time scheduling method. Thus, implementing the disclosed method will lead to cost savings. For a very few days, we can see that the cost for the disclosed case is even lower than Ideal case which is due to the peer-to-peer transfer modeling in former. If we compare the total procurement over entire month from Fig. 8, we can see that there is an approximate cost savings of 3.5% with the Proposed case as compared to the Base case while the difference between cost of Proposed and Ideal case is around 3.25 %.

The written description describes the subject matter herein to enable any person skilled in the art to make and use the embodiments. The scope of the subject matter embodiments is defined by the appended claims.

This disclosure relates generally to real-time scheduling EVs for charging at electric vehicle charging station (EVCS). The EVCS that enables charging of EVs, procure power from open markets at time varying prices. The estimation of demand profile for EVCS is very challenging as arrival of Electric Vehicles (EVs) is not known to EVCS apriori and is also heavily dependent on several uncertain factors associated with the EVs such as EVs individual power requirements, driving and travel patterns, EV owner behavior etc. The disclosure estimates a demand profile of an EVCS, optimizes the demand profile and schedules EV arrivals in real time. The scheduling is performed by offering flexibility by 1) increasing parking hours so that charging sessions can be scheduled in lower price periods and 2) participating in peer-to-peer transfer, so that EV with extra parking time charged during lower price periods can transfer power to others during high price periods.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300), comprising:

   receiving a plurality of inputs, via one or more hardware processors (104), wherein the plurality of inputs is associated with an energy market, an Electric vehicle charging station (EVCS), and a plurality of Electric Vehicles (EVs) associated with the EVCS and the plurality of input comprises a plurality of historical data of EV charging sessions, a plurality of EVCS parameters, a plurality of historical market price data and a plurality of EV data (302);
   forecasting an EVCS demand profile for the EVCS, via the one or more hardware processors (104), using the plurality of historical data of EV charging sessions based on a forecasting model technique, wherein the EVCS demand profile is a series of electricity demand values of the EVCS for a pre-defined day (304);
   optimizing the EVCS demand profile to obtain a minimum cost EVCS demand profile, via the one or more hardware processors (104), based on a linear programming optimization technique using the plurality of EVCS parameters and a forecasted price profile, wherein the forecasted price profile is obtained using the plurality of historical market price data (306); and
   scheduling the plurality of Electric Vehicles (EVs) for charging at the EVCS (308), via the one or more hardware processors (104), based on a real-time scheduling technique, comprising:

      computing a set of real-time EV parameters based on the plurality of inputs, wherein the set of real-time EV parameters comprises a charging power requirement, a remaining parking hours, a minimum charging hours, a charging rate to be scheduled in real time, and a priority of each EV from the plurality of EVs (308A);
      classifying the plurality of Electric Vehicles (EVs) based on the set of real-time EV parameters, wherein each EV is classified as one of a scheduled EVs, a non-scheduled EVs, and a pool EVs (308B), wherein the pool EVs is a set of EVs that are already charged; and
      scheduling the non-scheduled EVs and the pool EVs for charging at the EVCS (308C), wherein,

         a first sequence is scheduled for charging at the EVCS from the non-scheduled EV using the priority of EV, a first deviation factor, the charging power to be scheduled in real time, and the minimum cost EVCS demand profile, wherein the first sequence of EV is scheduled by classifying the non-scheduled EVs as one of: (a) a to-be scheduled EVs and (b) a remaining EVs (310), wherein the first deviation factor is a deviation between the minimum cost EVCS demand profile and the charging power to be scheduled in real time, and
         a second sequence is scheduled for charging at the EVCS for the remaining EVs using the pool EVs based on a peer-to-peer transfer technique (312).

2. The processor implemented method (300) according to claim 1, the linear programming optimization technique is expressed as:

$$\max_{P_t^{opti}} \sum_{t=1}^{T} \widehat{\lambda}_t \, P_t^{opti}$$

subject to:

$$P_t^{aggMin} \leq P_t^{opti} \leq P_t^{aggMax}, \qquad \forall t \in T$$

$$\sum_{t=1}^{T} P_t^{opti} = \sum_{t=1}^{T} P_t^{forc}$$

where,

$\lambda_t$ is forecasted price profile,
$P_t^{forc}$ is EVCS demand profile,

$P_t^{opti}$ is minimum cost EVCS demand profile, and

$P_t^{aggMin}$ and $P_t^{aggMax}$ are plurality of EVCS parameters.

3. The processor implemented method (300) according to claim 1, wherein the scheduled EVs is a set of EVs that are currently scheduled for charging, the non-scheduled EVs is a set of EVs that have not been scheduled for charging, wherein the scheduled EVs continue the charging which have been plugged in at previous time slots.

4. The processor implemented method (300) according to claim 1, wherein the peer-to-peer transfer technique enables the remaining EVs to participate in a peer-to-peer transfer, where the pool EVs, that are completely charged EVs, discharge to the remaining EVs based on a pre-defined peer-to-peer transfer time threshold and a second deviation factor, wherein the second deviation factor is a deviation of a net peer-to-peer transfer parameter from the first deviation factor, wherein the peer-to-peer transfer is obtained using the plurality of EV data of the pool EVs and the plurality of EV data of the unscheduled EVs.

5. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive a plurality of inputs, via one or more hardware processors (104), wherein the plurality of inputs is associated with an energy market, an Electric vehicle charging station (EVCS), and a plurality of Electric Vehicles (EVs) associated with the EVCS and the plurality of input comprises a plurality of historical data of EV charging sessions, a plurality of EVCS parameters, a plurality of historical market price data and a plurality of EV data;
forecast a EVCS demand profile for the EVCS, via one or more hardware processors (104), using the plurality of historical data of EV charging sessions based on a forecasting model technique, wherein the EVCS demand profile is a series of electricity demand values of the EVCS for a pre-defined day;
optimize the EVCS demand profile to obtain a minimum cost EVCS demand profile, via one or more hardware processors (104), based on a linear programming optimization technique using the plurality of EVCS parameters and a forecasted price profile, wherein the forecasted price profile is obtained using the plurality of historical market price data and;
schedule the plurality of Electric Vehicles (EVs) for charging at the EVCS, via one or more hardware processors (104), based on a real-time scheduling technique comprising:

computing a set of real-time EV parameters based on the plurality of inputs, wherein the set of real-time EV parameters comprises a charging power requirement, a remaining parking hours, a minimum charging hours, a charging rate to be scheduled in real time and a priority of each EV from the plurality of EVs;
classifying the plurality of Electric Vehicles (EVs) based on the set of real-time EV parameters, wherein each EV is classified as one of a scheduled EVs, a non-scheduled EVs and a pool EVs), wherein the pool EVs is a set of EVs that are already charged; and
scheduling the non-scheduled EV and the pool EV for charging at the EVCS, wherein:

a first sequence is scheduled for charging at the EVCS from the non-scheduled EV using the priority of EV, a first deviation factor, the charging power to be scheduled in real time, and the minimum cost EVCS demand profile, wherein the first sequence of EV is scheduled by classifying the non-scheduled EVs as one of: (a) a to-be scheduled EVs and (b) a remaining EVs, wherein the first deviation factor is a deviation between the minimum cost EVCS demand profile and the charging power to be scheduled in real time,; and
a second sequence is scheduled for charging at the EVCS for the remaining EVs using the pool EVs based on a peer-to-peer transfer technique.

6. The system (100) according to claim 5, the linear programming optimization technique is expressed as shown below:

$$\max_{p_t^{opti}} \sum_{t=1}^{T} \widehat{\lambda}_t \, P_t^{opti}$$

subject to:

$$P_t^{aggMin} \;\leq\; P_t^{opti} \;\leq\; P_t^{aggMax} \,, \qquad \forall t \in T$$

$$\sum_{t=1}^{T} P_t^{opti} = \sum_{t=1}^{T} P_t^{forc}$$

where,

$\lambda_t$ is forecasted price profile,

$P_t^{forc}$ is EVCS demand profile,

$P_t^{opti}$ is minimum cost EVCS demand profile, and

$P_t^{aggMin}$ and $P_t^{aggMax}$ are plurality of EVCS parameters.

**7.** The system (100) according to claim 5, wherein the scheduled EVs is a set of EVs that are currently scheduled for charging, the non-scheduled EVs is a set of EVs that have not been scheduled for charging wherein the scheduled EVs continue the charging which have been plugged in at previous time slots.

**8.** The system (100) according to claim 5, wherein the peer-to-peer transfer technique enables the remaining EVs to participate in a peer-to-peer transfer, where the pool EVs, that are completely charged EVs, discharge to the remaining EVs based on a pre-defined peer-to-peer transfer time threshold and a second deviation factor, wherein the second deviation factor is a deviation of a net peer-to-peer transfer parameter from the first deviation factor, wherein the peer-to-peer transfer is obtained using the plurality of EV data of the pool EVs and the plurality of EV data of the unscheduled EVs.

**9.** One or more non-transitory machine readable information storage mediums comprising one or more instructions which when executed by one or more hardware processors cause:

receiving a plurality of inputs, wherein the plurality of inputs is associated with an energy market, an Electric vehicle charging station (EVCS), and a plurality of Electric Vehicles (EVs) associated with the EVCS and the plurality of input comprises a plurality of historical data of EV charging sessions, a plurality of EVCS parameters, a plurality of historical market price data and a plurality of EV data;

forecasting an EVCS demand profile for the EVCS, using the plurality of historical data of EV charging sessions based on a forecasting model technique, wherein the EVCS demand profile is a series of electricity demand values of the EVCS for a pre-defined day;

optimizing the EVCS demand profile to obtain a minimum cost EVCS demand profile, based on a linear programming optimization technique using the plurality of EVCS parameters and a forecasted price profile, wherein the forecasted price profile is obtained using the plurality of historical market price data; and

scheduling the plurality of Electric Vehicles (EVs) for charging at the EVCS, based on a real-time scheduling technique, comprising:

computing a set of real-time EV parameters based on the plurality of inputs, wherein the set of real-time EV parameters comprises a charging power requirement, a remaining parking hours, a minimum charging hours, a charging rate to be scheduled in real time, and a priority of each EV from the plurality of EVs;

classifying the plurality of Electric Vehicles (EVs) based on the set of real-time EV parameters, wherein each EV is classified as one of a scheduled EVs, a non-scheduled EVs, and a pool EVs, wherein the pool EVs is a set of EVs that are already charged; and

scheduling the non-scheduled EVs and the pool EVs for charging at the EVCS, wherein,
a first sequence is scheduled for charging at the EVCS from the non-scheduled EV using the priority of EV, a first deviation factor, the charging power to be scheduled in real time, and the minimum cost EVCS demand profile, wherein the first sequence of EV is scheduled by classifying the non-scheduled EVs as one of: (a) a to-be scheduled EVs and (b) a remaining EVs, wherein the first deviation factor is a deviation between the minimum cost EVCS demand profile and the charging power to be scheduled in real time, and

a second sequence is scheduled for charging at the EVCS for the remaining EVs using the pool EVs based on a peer-to-peer transfer technique.

**Patentansprüche**

1. Prozessorimplementiertes Verfahren (300), umfassend:

   Empfangen einer Mehrzahl von Eingaben über einen oder mehrere Hardwareprozessoren (104), wobei die Mehrzahl von Eingaben mit einem Energiemarkt, einer Elektrofahrzeugladestation (EVCS) und einer Mehrzahl von Elektrofahrzeugen (EVs), die mit der EVCS assoziiert sind, assoziiert ist und die Mehrzahl von Eingaben eine Mehrzahl von historischen Daten von EV-Ladesitzungen, eine Mehrzahl von EVCS-Parametern, eine Mehrzahl von historischen Marktpreisdaten und eine Mehrzahl von EV-Daten (302) umfasst;
   Vorhersagen eines EVCS-Bedarfsprofils für die EVCS über den einen oder die mehreren Hardwareprozessoren (104) unter Verwendung der Mehrzahl von historischen Daten von EV-Ladesitzungen basierend auf einer Vorhersagemodelltechnik, wobei das EVCS-Bedarfsprofil eine Reihe von Elektrizitätsbedarfswerten der EVCS für einen vordefinierten Tag (304) ist;
   Optimieren des EVCS-Bedarfsprofils, um ein Mindestkosten-EVCS-Bedarfsprofil über den einen oder die mehreren Hardwareprozessoren (104) basierend auf einer linearen Programmierungsoptimierungstechnik unter Verwendung der Mehrzahl von EVCS-Parametern und eines vorhergesagten Preisprofils zu erhalten, wobei das vorhergesagte Preisprofil unter Verwendung der Mehrzahl von historischen Marktpreisdaten (306) erhalten wird; und
   Planen der Mehrzahl von Elektrofahrzeugen (EVs) zum Laden an der EVCS (308) über den einen oder die mehreren Hardwareprozessoren (104) basierend auf einer Echtzeitplanungstechnik, umfassend:

      Berechnen eines Satzes von Echtzeit-EV-Parametern basierend auf der Mehrzahl von Eingaben, wobei der Satz von Echtzeit-EV-Parametern einen Ladeleistungsbedarf, verbleibende Parkstunden, Mindestladestunden, eine in Echtzeit zu planende Laderate und eine Priorität jedes EV aus der Mehrzahl von EVs (308A) umfasst;
      Klassifizieren der Mehrzahl von Elektrofahrzeugen (EVs) basierend auf dem Satz von Echtzeit-EV-Parametern, wobei jedes EV als eines von geplanten EVs, nicht geplanten EVs und Pool-EVs (308B) klassifiziert wird, wobei die Pool-EVs ein Satz von EVs sind, die bereits geladen sind; und
      Planen der nicht geplanten EVs und der Pool-EVs zum Laden an der EVCS (308C), wobei

         eine erste Sequenz zum Laden an der EVCS von dem nicht geplanten EV unter Verwendung der Priorität des EV, eines ersten Abweichungsfaktors, der in Echtzeit zu planenden Ladeleistung und des Mindestkosten-EVCS-Bedarfsprofils geplant wird, wobei die erste Sequenz von EV durch Klassifizieren der nicht geplanten EVs als eines von (a) einem zu planenden EVs und (b) einem verbleibenden EVs (310) geplant wird, wobei der erste Abweichungsfaktor eine Abweichung zwischen dem Mindestkosten-EVCS-Bedarfsprofil und der in Echtzeit zu planenden Ladeleistung ist, und
         eine zweite Sequenz zum Laden an der EVCS für die verbleibenden EVs unter Verwendung der Pool-EVs basierend auf einer Peer-to-Peer-Transfertechnik (312) geplant wird.

2. Prozessorimplementiertes Verfahren (300) nach Anspruch 1, wobei die lineare Programmierungsoptimierungstechnik ausgedrückt wird als:

$$\max_{p_t^{opti}} \sum_{t=1}^{T} \widehat{\lambda}_t \, P_t^{opti}$$

vorbehaltlich:

$$P_t^{aggMin} \leq P_t^{opti} \leq P_t^{aggMax}, \qquad \forall t \in T$$

$$\sum_{t=1}^{T} P_t^{opti} = \sum_{t=1}^{T} P_t^{forc}$$

wobei

$\lambda_t$ das vorhergesagte Preisprofil ist,

$P_t^{forc}$ das EVCS-Bedarfsprofil ist,

$P_t^{opti}$ das Mindestkosten-EVCS-Bedarfsprofil ist, und

$P_t^{aggMin}$ und $P_t^{aggMax}$ die Mehrzahl von EVCS-Parametern ist.

3. Prozessorimplementiertes Verfahren (300) nach Anspruch 1, wobei die geplanten EVs ein Satz von EVs sind, die aktuell zum Laden geplant sind, die nicht geplanten EVs ein Satz von EVs sind, die nicht zum Laden geplant wurden, wobei die geplanten EVs das Laden fortsetzen, die in vorherigen Zeitschlitzen eingesteckt wurden.

4. Prozessorimplementiertes Verfahren (300) nach Anspruch 1, wobei die Peer-to-Peer-Transfertechnik den verbleibenden EVs ermöglicht, an einem Peer-to-Peer-Transfer teilzunehmen, wobei die Pool-EVs, die vollständig geladene EVs sind, zu den verbleibenden EVs basierend auf einem vordefinierten Peer-to-Peer-Transferzeitschwellenwert und einem zweiten Abweichungsfaktor entladen, wobei der zweite Abweichungsfaktor eine Abweichung eines Netto-Peer-to-Peer-Transferparameters von dem ersten Abweichungsfaktor ist, wobei der Peer-to-Peer-Transfer unter Verwendung der Mehrzahl von EV-Daten der Pool-EVs und der Mehrzahl von EV-Daten der nicht geplanten EVs erhalten wird.

5. System (100), umfassend:

einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) gekoppelt sind, wobei der eine oder die mehreren Hardwareprozessoren (104) durch die Anweisungen konfiguriert sind zum:

Empfangen einer Mehrzahl von Eingaben über einen oder mehrere Hardwareprozessoren (104), wobei die Mehrzahl von Eingaben mit einem Energiemarkt, einer Elektrofahrzeugladestation (EVCS) und einer Mehrzahl von Elektrofahrzeugen (EVs), die mit der EVCS assoziiert sind, assoziiert ist und die Mehrzahl von Eingaben eine Mehrzahl von historischen Daten von EV-Ladesitzungen, eine Mehrzahl von EVCS-Parametern, eine Mehrzahl von historischen Marktpreisdaten und eine Mehrzahl von EV-Daten umfasst;
Vorhersagen eines EVCS-Bedarfsprofils für die EVCS über einen oder mehrere Hardwareprozessoren (104) unter Verwendung der Mehrzahl von historischen Daten von EV-Ladesitzungen basierend auf einer Vorhersagemodelltechnik, wobei das EVCS-Bedarfsprofil eine Reihe von Elektrizitätsbedarfswerten der EVCS für einen vordefinierten Tag ist;
Optimieren des EVCS-Bedarfsprofils, um ein Mindestkosten-EVCS-Bedarfsprofil über einen oder mehrere Hardwareprozessoren (104) basierend auf einer linearen Programmierungsoptimierungstechnik unter Verwendung der Mehrzahl von EVCS-Parametern und eines vorhergesagten Preisprofils zu erhalten, wobei das vorhergesagte Preisprofil unter Verwendung der Mehrzahl von historischen Marktpreisdaten erhalten wird; und
Planen der Mehrzahl von Elektrofahrzeugen (EVs) zum Laden an der EVCS über einen oder mehrere Hardwareprozessoren (104) basierend auf einer Echtzeitplanungstechnik, umfassend:

Berechnen eines Satzes von Echtzeit-EV-Parametern basierend auf der Mehrzahl von Eingaben, wobei der Satz von Echtzeit-EV-Parametern einen Ladeleistungsbedarf, verbleibende Parkstunden, Mindestladestunden, eine in Echtzeit zu planende Laderate und eine Priorität jedes EV aus der Mehrzahl von EVs umfasst;

Klassifizieren der Mehrzahl von Elektrofahrzeugen (EVs) basierend auf dem Satz von Echtzeit-EV-Parametern, wobei jedes EV als eines von geplanten EVs, nicht geplanten EVs und Pool-EVs klassifiziert wird, wobei die Pool-EVs ein Satz von EVs sind, die bereits geladen sind; und

Planen des nicht geplanten EV und des Pool-EV zum Laden an der EVCS, wobei

eine erste Sequenz zum Laden an der EVCS von dem nicht geplanten EV unter Verwendung der Priorität des EV, eines ersten Abweichungsfaktors, der in Echtzeit zu planenden Ladeleistung und des Mindestkosten-EVCS-Bedarfsprofils geplant wird, wobei die erste Sequenz von EV durch Klassifizieren der nicht geplanten EVs als eines von (a) einem zu planenden EVs und (b) einem verbleibenden EVs geplant wird, wobei der erste Abweichungsfaktor eine Abweichung zwischen dem Mindestkosten-EVCS-Bedarfsprofil und der in Echtzeit zu planenden Ladeleistung ist; und

eine zweite Sequenz zum Laden an der EVCS für die verbleibenden EVs unter Verwendung der Pool-EVs basierend auf einer Peer-to-Peer-Transfertechnik geplant wird.

6. System (100) nach Anspruch 5, wobei die lineare Programmierungsoptimierungstechnik wie unten gezeigt ausgedrückt wird:

$$\max_{p_t^{opti}} \sum_{t=1}^{T} \widehat{\lambda}_t \, P_t^{opti}$$

vorbehaltlich:

$$P_t^{aggMin} \leq P_t^{opti} \leq P_t^{aggMax}, \qquad \forall t \in T$$

$$\sum_{t=1}^{T} P_t^{opti} = \sum_{t=1}^{T} P_t^{forc}$$

wobei

$\lambda_t$ das vorhergesagte Preisprofil ist,

$P_t^{forc}$ das EVCS-Bedarfsprofil ist,

$P_t^{opti}$ das Mindestkosten-EVCS-Bedarfsprofil ist, und

$P_t^{aggMin}$ und $P_t^{aggMax}$ die Mehrzahl von EVCS-Parametern ist.

7. System (100) nach Anspruch 5, wobei die geplanten EVs ein Satz von EVs sind, die aktuell zum Laden geplant sind, die nicht geplanten EVs ein Satz von EVs sind, die nicht zum Laden geplant wurden, wobei die geplanten EVs das Laden fortsetzen, die in vorherigen Zeitschlitzen eingesteckt wurden.

8. System (100) nach Anspruch 5, wobei die Peer-to-Peer-Transfertechnik den verbleibenden EVs ermöglicht, an einem Peer-to-Peer-Transfer teilzunehmen, wobei die Pool-EVs, die vollständig geladene EVs sind, zu den verbleibenden EVs basierend auf einem vordefinierten Peer-to-Peer-Transferzeitschwellenwert und einem zweiten Abweichungsfaktor entladen, wobei der zweite Abweichungsfaktor eine Abweichung eines Netto-Peer-to-Peer-Transferparameters von dem ersten Abweichungsfaktor ist, wobei der Peer-to-Peer-Transfer unter Verwendung der Mehrzahl von EV-Daten der Pool-EVs und der Mehrzahl von EV-Daten der nicht geplanten EVs erhalten wird.

9. Ein oder mehrere nichtflüchtige maschinenlesbare Informationsspeichermedien, die eine oder mehrere Anweisungen umfassen, die, wenn sie von einem oder mehreren Hardwareprozessoren ausgeführt werden, bewirken:

Empfangen einer Mehrzahl von Eingaben, wobei die Mehrzahl von Eingaben mit einem Energiemarkt, einer Elektrofahrzeugladestation (EVCS) und einer Mehrzahl von Elektrofahrzeugen (EVs), die mit der EVCS assoziiert sind, assoziiert ist und die Mehrzahl von Eingaben eine Mehrzahl von historischen Daten von EV-Ladesitzungen, eine Mehrzahl von EVCS-Parametern, eine Mehrzahl von historischen Marktpreisdaten und eine Mehrzahl von EV-Daten umfasst;

Vorhersagen eines EVCS-Bedarfsprofils für die EVCS unter Verwendung der Mehrzahl von historischen Daten von EV-Ladesitzungen basierend auf einer Vorhersagemodelltechnik, wobei das EVCS-Bedarfsprofil eine Reihe von Elektrizitätsbedarfswerten der EVCS für einen vordefinierten Tag ist;

Optimieren des EVCS-Bedarfsprofils, um ein Mindestkosten-EVCS-Bedarfsprofil basierend auf einer linearen Programmierungsoptimierungstechnik unter Verwendung der Mehrzahl von EVCS-Parametern und eines vorhergesagten Preisprofils zu erhalten, wobei das vorhergesagte Preisprofil unter Verwendung der Mehrzahl von historischen Marktpreisdaten erhalten wird; und

Planen der Mehrzahl von Elektrofahrzeugen (EVs) zum Laden an der EVCS basierend auf einer Echtzeitplanungstechnik, umfassend:

Berechnen eines Satzes von Echtzeit-EV-Parametern basierend auf der Mehrzahl von Eingaben, wobei der Satz von Echtzeit-EV-Parametern einen Ladeleistungsbedarf, verbleibende Parkstunden, Mindestladestunden, eine in Echtzeit zu planende Laderate und eine Priorität jedes EV aus der Mehrzahl von EVs umfasst;

Klassifizieren der Mehrzahl von Elektrofahrzeugen (EVs) basierend auf dem Satz von Echtzeit-EV-Parametern, wobei jedes EV als eines von geplanten EVs, nicht geplanten EVs und Pool-EVs klassifiziert wird, wobei die Pool-EVs ein Satz von EVs sind, die bereits geladen sind; und

Planen der nicht geplanten EVs und der Pool-EVs zum Laden an der EVCS, wobei eine erste Sequenz zum Laden an der EVCS von dem nicht geplanten EV unter Verwendung der Priorität des EV, eines ersten Abweichungsfaktors, der in Echtzeit zu planenden Ladeleistung und des Mindestkosten-EVCS-Bedarfsprofils geplant wird, wobei die erste Sequenz von EV durch Klassifizieren der nicht geplanten EVs als eines von (a) einem zu planenden EVs und (b) einem verbleibenden EVs geplant wird, wobei der erste Abweichungsfaktor eine Abweichung zwischen dem Mindestkosten-EVCS-Bedarfsprofil und der in Echtzeit zu planenden Ladeleistung ist, und

eine zweite Sequenz zum Laden an der EVCS für die verbleibenden EVs unter Verwendung der Pool-EVs basierend auf einer Peer-to-Peer-Transfertechnik geplant wird.

## Revendications

1. Procédé mis en oeuvre par processeur (300), comprenant :

la réception d'une pluralité d'entrées, via un ou plusieurs processeurs matériels (104), dans lequel la pluralité d'entrées est associée à un marché de l'énergie, à une station de recharge de véhicule électrique (SRVE), et à une pluralité de véhicules électriques (VE) associés à la SRVE, **cette** pluralité d'entrées comprend une pluralité de données historiques de sessions de recharge des VE, une pluralité de paramètres la SRVE, une pluralité de données historiques de prix de marché et une pluralité de données des VE (302) ;

la prévision d'un profil de demande de la SRVE pour la SRVE, via le ou les processeurs matériels (104), en utilisant la pluralité de données historiques de sessions de recharge des VE sur la base d'une technique de modélisation prévisionnelle, dans lequel le profil de demande de la SRVE est une série de valeurs de demande d'électricité de la SRVE pour une journée prédéfinie (304) ;

l'optimisation du profil de demande de la SRVE pour obtenir un profil de demande de la SRVE à coût minimum, via le ou les processeurs matériels (104), sur la base d'une technique d'optimisation par programmation linéaire utilisant la pluralité de paramètres de la SRVE et un profil de prix prévisionnel, dans lequel le profil de prix prévisionnel est obtenu à partir de la pluralité des données historiques de prix de marché (306) ; et

la planification de la recharge de la pluralité de véhicules électriques (VE) pour une recharge au niveau de le SRVE (308), via le ou les processeurs matériels (104), sur la base d'une technique de planification en temps réel, comprenant :

le calcul d'un ensemble de paramètres des VE en temps réel à partir de la pluralité d'entrées, dans lequel l'ensemble de paramètres de la VE en temps réel comprend une puissance de recharge requise, des heures de stationnement restantes, des heures de recharge minimales, un taux de recharge à planifier en temps réel, et une priorité de chaque VE parmi la pluralité de VE (308A) ;

la classification de la pluralité de véhicules électriques (VE) sur la base de l'ensemble de paramètres de la VE en temps réel, dans lequel chaque VE est classé dans l'une des catégories suivantes : VE programmés, VE non programmés, et VE du pool (308B), le VE du pool étant un ensemble de VE déjà rechargés; et

la planification de la recharge des VE non programmés et des VE du pool pour une recharge au niveau de la SRVE (308C), dans lequel,

une première séquence est programmée pour la recharge au niveau de la SRVE à partir des VE non programmé en utilisant la priorité des VE, un premier facteur de déviation, la puissance de recharge à planifier en temps réel, et le profil de demande de la SRVE à coût minimum, dans lequel la première séquence de VE est programmée en classant les VE non programmés dans l'une des catégories suivantes : (a) VE à programmer et (b) VE restants (310), dans lequel le premier facteur de déviation est une déviation entre le profil de demande de la SRVE à coût minimum et la puissance de recharge à planifier en temps réel, et

une seconde séquence est programmée pour une recharge au niveau de la SRVE pour les VE restants en utilisant les VE du pool sur la base d'une technique de transfert pair-à-pair (312).

2. Procédé mis en oeuvre par processeur (300) selon la revendication 1, la technique d'optimisation par programmation linéaire est exprimée comme suit :

$$\max_{p_t^{opti}} \sum_{t=1}^{T} \widehat{\lambda}_t \, P_t^{opti}$$

sous réserve de :

$$P_t^{aggMin} \leq P_t^{opti} \leq P_t^{aggMax}, \qquad \forall t \in T$$

$$\sum_{t=1}^{T} P_t^{opti} = \sum_{t=1}^{T} P_t^{forc}$$

où,

$\lambda_t$ est le profil de prix prévisionnel,

$P_t^{forc}$ est le profil de demande de la SRVE,

$P_t^{opti}$ est le profil de demande de la SRVE à coût minimum, et

$P_t^{aggMin}$ et $P_t^{aggMax}$ sont la pluralité de paramètres de la SRVE.

3. Procédé mis en oeuvre par processeur (300) selon la revendication 1, dans lequel les VE programmés sont un ensemble de VE qui sont actuellement programmés pour la recharge, les VE non programmés sont un ensemble de VE qui n'ont pas été programmé pour la recharge, dans lequel les VE programmés continuent la recharge pour ceux qui ont été connectés lors de créneaux horaires précédents.

4. Procédé mis en oeuvre par processeur (300) selon la revendication 1, dans lequel la technique de transfert pair-à-pair permet aux VE restants de participer à un transfert pair-à-pair, où les VE du pool, qui sont des VE complètement chargés, se déchargent vers les VE restants sur la base d'un seuil de temps de transfert pair-à-pair prédéfini et d'un second facteur de déviation, dans lequel le second facteur de déviation est une déviation d'un paramètre net de transfert pair-à-pair net par rapport au premier facteur de déviation, dans lequel le transfert pair-à-pair est obtenu en utilisant la pluralité de données des VE du pool et de la pluralité de données des VE non programmés.

5. Système (100), comprenant :

une mémoire (102) stockant des instructions ;
une ou plusieurs interfaces de communication (106) ; et
un ou plusieurs processeurs matériels (104) couplés à la mémoire (102) via la ou les interfaces de communication (106), dans lequel le ou les processeurs matériels (104) sont configurés par les instructions pour :

la réception d'une pluralité d'entrées, via un ou plusieurs processeurs matériels (104), dans lequel la pluralité d'entrées est associée à un marché de l'énergie, à une station de recharge de véhicule électrique (SRVE), et à une pluralité de véhicules électriques (VE) associés à la SRVE, cette pluralité d'entrées comprend une pluralité de données historiques de sessions de recharge des VE, une pluralité de paramètres la SRVE, une pluralité de données historiques de prix de marché et une pluralité de données des VE ;

la prévision d'un profil de demande de la SRVE, via le ou les processeurs matériels (104), en utilisant la pluralité de données historiques de sessions de recharge des VE sur la base d'une technique de modélisation prévisionnelle, dans lequel le profil de demande de la SRVE est une série de valeurs de demande d'électricité de la SRVE pour une journée prédéfinie ;

l'optimisation du profil de demande de la SRVE pour obtenir un profil de demande de la SRVE à coût minimum, via le ou les processeurs matériels (104), sur la base d'une technique d'optimisation par programmation linéaire utilisant la pluralité de paramètres de la SRVE et un profil de prix prévisionnel, dans lequel le profil de prix prévisionnel est obtenu à partir de la pluralité des données historiques de prix de marché et ;

la planification de la recharge de la pluralité de véhicules électriques (VE) pour une charge au niveau de le SRVE (308), via le ou les processeurs matériels (104), sur la base d'une technique de planification en temps réel, comprenant :

le calcul d'un ensemble de paramètres des VE en temps réel à partir de la pluralité d'entrées, dans lequel l'ensemble de paramètres de la VE en temps réel comprend une puissance de recharge requise, des heures de stationnement restantes, des heures de recharge minimales, un taux de recharge à planifier en temps réel, et une priorité de chaque VE parmi la pluralité de VE ;

la classification de la pluralité de véhicules électriques (VE) sur la base de l'ensemble de paramètres de la VE en temps réel, dans lequel chaque VE est classé dans l'une des catégories suivantes : VE programmés, VE non programmés, et VE du pool, le VE du pool étant un ensemble de VE déjà rechargés; et

la planification de la recharge des VE non programmés et des VE du pool pour une recharge au niveau de la SRVE, dans lequel :

une première séquence est programmée pour la recharge au niveau de la SRVE à partir des VE non programmé en utilisant la priorité des VE, un premier facteur de déviation, la puissance de recharge à planifier en temps réel, et le profil de demande de la SRVE à coût minimum, dans lequel la première séquence de VE est programmée en classant les VE non programmés dans l'une des catégories suivantes : (a) VE à programmer et (b) VE restants, dans lequel le premier facteur de déviation est une déviation entre le profil de demande de la SRVE à coût minimum et la puissance de recharge à planifier en temps réel, et

une seconde séquence est programmée pour une recharge au niveau de la SRVE pour les VE restants en utilisant les VE du pool sur la base d'une technique de transfert pair-à-pair.

6. Système (100) selon la revendication 5, la technique d'optimisation par programmation linéaire est exprimée comme suit :

$$\max_{p_t^{opti}} \sum_{t=1}^{T} \widehat{\lambda}_t \, P_t^{opti}$$

sous réserve de :

$$P_t^{aggMin} \leq P_t^{opti} \leq P_t^{aggMax}, \qquad \forall t \in T$$

$$\sum_{t=1}^{T} P_t^{opti} = \sum_{t=1}^{T} P_t^{forc}$$

où,

$\lambda_t$ est le profil de prix prévisionnel,

$P_t^{forc}$ est le profil de demande de la SRVE,

$P_t^{opti}$ est le profil de demande de la SRVE à coût minimum, et

$P_t^{aggMin}$ et $P_t^{aggMax}$ sont la pluralité de paramètres de la SRVE.

7. Système (100) selon la revendication 5, dans lequel les VE programmés sont un ensemble de VE qui sont actuellement programmés pour la recharge, les VE non programmés sont un ensemble de VE qui n'ont pas été programmé pour la recharge, dans lequel les VE programmés continuent la recharge pour ceux qui ont été connectés lors de créneaux horaires précédents.

8. Système (100) selon la revendication 5, dans lequel la technique de transfert pair-à-pair permet aux VE restants de participer à un transfert pair-à-pair, où les VE du pool, qui sont des VE complètement chargés, se déchargent vers les VE restants sur la base d'un seuil de temps de transfert pair-à-pair prédéfini et d'un second facteur de déviation, dans lequel le second facteur de déviation est une déviation d'un paramètre net de transfert pair-à-pair net par rapport au premier facteur de déviation, dans lequel le transfert pair-à-pair est obtenu en utilisant la pluralité de données des VE du pool et de la pluralité de données des VE non programmés.

9. Un ou plusieurs supports de stockage d'informations lisibles par machine non transitoires comprenant une ou plusieurs instructions qui, lorsqu'elles sont exécutées par un ou plusieurs processeurs matériels, amènent :

la réception d'une pluralité d'entrées, dans lequel la pluralité d'entrées est associée à un marché de l'énergie, à une station de recharge de véhicule électrique (SRVE), et à une pluralité de véhicules électriques (VE) associés à la SRVE, cette pluralité d'entrées comprend une pluralité de données historiques de sessions de recharge des VE, une pluralité de paramètres la SRVE, une pluralité de données historiques de prix de marché et une pluralité de données des VE ;

la prévision d'un profil de demande de la SRVE, en utilisant la pluralité de données historiques de sessions de recharge des VE sur la base d'une technique de modélisation prévisionnelle, dans lequel le profil de demande de la SRVE est une série de valeurs de demande d'électricité de la SRVE pour une journée prédéfinie ;

l'optimisation du profil de demande de la SRVE pour obtenir un profil de demande de la SRVE à coût minimum, sur la base d'une technique d'optimisation par programmation linéaire utilisant la pluralité de paramètres de la SRVE et un profil de prix prévisionnel, dans lequel le profil de prix prévisionnel est obtenu à partir de la pluralité des données historiques de prix de marché ; et

la planification de la recharge de la pluralité de véhicules électriques (VE) pour une charge au niveau de le SRVE, sur la base d'une technique de planification en temps réel, comprenant :

le calcul d'un ensemble de paramètres des VE en temps réel à partir de la pluralité d'entrées, dans lequel l'ensemble de paramètres de la VE en temps réel comprend une puissance de recharge requise, des heures de stationnement restantes, des heures de recharge minimales, un taux de recharge à planifier en temps réel, et une priorité de chaque VE parmi la pluralité de VE ;

la classification de la pluralité de véhicules électriques (VE) sur la base de l'ensemble de paramètres de la VE en temps réel, dans lequel chaque VE est classé dans l'une des catégories suivantes : VE programmés, VE non programmés, et VE du pool, le VE du pool étant un ensemble de VE déjà rechargés ; et

la planification de la recharge des VE non programmés et des VE du pool pour une recharge au niveau de la SRVE (308C), dans lequel,

une première séquence est programmée pour la recharge au niveau de la SRVE à partir des VE non programmé en utilisant la priorité des VE, un premier facteur de déviation, la puissance de recharge à planifier en temps réel, et le profil de demande de la SRVE à coût minimum, dans lequel la première séquence de VE est programmée en classant les VE non programmés dans l'une des catégories suivantes : (a) VE à programmer et (b) VE restants, dans lequel le premier facteur de déviation est une déviation entre le profil de demande de la SRVE à coût minimum et la puissance de recharge à planifier en temps réel, et

une seconde séquence est programmée pour une recharge au niveau de la SRVE pour les VE restants en utilisant les VE du pool sur la base d'une technique de transfert pair-à-pair

SYSTEM
100

PROCESSOR(S)
104

I/O
INTERFACE(S)
106

MEMORY
102

DATABASE
108

FIG. 1

24

Plurality of inputs

```
┌───────────────────────────────────────────────────────────┐
│                                                           │
│         ┌───────────────────────────────────────┐         │
│         │          INPUT MODULE (S)             │         │
│         │               202                     │         │
│         └───────────────────────────────────────┘         │
│              │              │              │              │
│              ▼              ▼              ▼              │
│     ┌────────────┐  ┌────────────┐  ┌────────────┐       │
│     │ FORECASTER │→ │ OPTIMIZER  │→ │ SCHEDULER  │       │
│     │    204     │  │    206     │  │    208     │       │
│     └────────────┘  └────────────┘  └────────────┘       │
│                                                           │
└───────────────────────────────────────────────────────────┘
```

(a) Demand profile for EVCS, and
(b) Scheduling electric vehicles (EVs) for charging

**FIG. 2**

receiving a plurality of inputs, via one or more hardware processors, wherein the plurality of inputs is associated with an energy market, an Electric vehicle charging station (EVCS), and a plurality of Electric Vehicles (EVs) associated with the EVCS and the plurality of input comprises a plurality of historical data of EV charging sessions, a plurality of EVCS parameters, a plurality of historical market price data and a plurality of EV data    — 302

forecasting a EVCS demand profile for the EVCS, via the one or more hardware processors, using the plurality of historical data of EV charging sessions based on a forecasting model technique, wherein the EVCS demand profile is a series of demand values of the EVCS for a pre-defined day    — 304

optimizing the EVCS demand profile to obtain a minimum cost EVCS demand profile, via the one or more hardware processors, based on a linear programming optimization technique using the plurality of EVCS parameters and a forecasted price profile, wherein the forecasted price profile is obtained using the plurality of historical market price data    — 306

A

300

**FIG. 3A**

A

scheduling the plurality of Electric Vehicles (EVs) for charging at the EVCS, via the one or more hardware processors, based on a real-time scheduling technique comprising — 308

computing a set of real-time EV parameters based on the plurality of inputs, wherein the set of real-time EV parameters comprises a charging power requirement, a remaining parking hours, a minimum charging hours, a charging rate to be scheduled in real time and a priority of each EV from the plurality of EVs — 308A

classifying the plurality of Electric Vehicles (EVs) based on the set of real-time EV parameters, wherein each EV is classified as one of a scheduled EVs, a non-scheduled EVs and a pool EVs — 308B

B

**300**

**FIG. 3B**

B

scheduling the non-scheduled EV and the pool
EV for charging at the EVCS wherein:

308

308C

310

a first sequence is scheduled for charging at the
EVCS from the non-scheduled EV using the priority
of EV, a first deviation factor, the charging power to
be scheduled in real time, and the minimum cost
EVCS demand profile, wherein the first sequence of
EV is scheduled by classifying the non-scheduled
EVs as one of: (a) a to-be scheduled EVs and (b) a
remaining EVs

312

a second sequence is scheduled for charging at
the EVCS for the remaining EVs using the pool
EVs based on a peer-to-peer transfer technique

300

**FIG. 3C**

**FIG. 4**

FIG. 5

**FIG. 6**

**FIG. 7**

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221036454

- US 2012245750 A1